# EUROPÄISCHE PATENTSCHRIFT

(11) **EP 3 762 613 B1**
(45) Veröffentlichungstag und Bekanntmachung des Hinweises auf die Patenterteilung: **01.03.2023**
(21) Anmeldenummer: 19708840.4
(22) Anmeldetag: 01.03.2019
(51) Int. Cl.: F04D 19/04, F04D 29/66, F16C 35/077, F16C 27/06, F04D 29/056

(54) **VAKUUMPUMPE**
VACUUM PUMP
POMPE À VIDE

(30) Priorität: 06.03.2018 DE 202018001170 U
(43) Veröffentlichungstag der Anmeldung: 13.01.2021
(73) Patentinhaber: Leybold GmbH, 50968 Köln (DE)
(72) Erfinder: HÖLZER, Rainer, 50354 Hürth (DE)
(74) Vertreter: dompatent von Kreisler Selting Werner - Partnerschaft von Patent- und Rechtsanwälten mbB
(86) Internationale Anmeldenummer: PCT/EP2019/055205
(87) Internationale Veröffentlichungsnummer: WO 2019/170555

(56) Entgegenhaltungen:
- EP-A1- 1 925 833
- WO-A1-2006/131694
- JP-A- 2010 203 504
- US-A1- 2008 152 483

## Beschreibung

Die Erfindung betrifft eine Vakuumpumpe.

Eine Vakuumpumpe, wie beispielsweise eine Turbomolekularpumpe, weist in einem Pumpengehäuse ein mehrere Statorscheiben aufweisendes Statorelement auf. Ferner ist ein wiederum mehrere Rotorscheiben aufweisendes Rotorelement vorgesehen, wobei die Statorscheiben und die Rotorscheiben in axialer Richtung bzw. in Förderrichtung abwechselnd zueinander angeordnet sind. Das die Rotorscheiben aufweisende Rotorelement ist von einer Rotorwelle getragen. Die Rotorwelle ist von Lagerelementen getragen, die mittelbar oder unmittelbar im Pumpengehäuse angeordnet sind. Bei anderen Vakuumpumpentypen, wie beispielsweise Schraubenpumpen sind die Rotorelemente durch zwei Schraubenrotoren ausgebildet, wobei jeder Schraubenrotor über eine Rotorwelle im Pumpengehäuse gelagert ist. Das Statorelement ist hierbei durch das Pumpengehäuse bzw. die Ausgestaltung der Bohrung bzw. Öffnung des Pumpengehäuses in dem die Schraubenrotoren angeorndet sind, ausgebildet. Entsprechendes gilt bei Rootspumpen, Klauenpumpen und dergleichen.

Die Lagerung der Rotorwellen erfolgt häufig über Magnetlager und/oder Wälzlager. Bei Wälzlagern ist es bekannt, diese nicht unmittelbar im Pumpengehäuse anzuordnen, sondern zwischen einem Außenring des Wälzlagers und dem Pumpengehäuse ein Abstützelement wie einen Schwingungsring vorzusehen. Durch ein derartiges Abstützelement werden je nach Ausgestaltung radiale und/oder axiale Kräfte aufgenommen, bzw. gedämpft.

Ein besonders ausgestaltetes Abstützelement ist aus EP 2064448 bekannt. Dieses Abstützelement weist einen ringförmigen Innenteil und einen ringförmigen Außenteil auf. Das Innenteil und das Außenteil sind über Federarme miteinander verbunden, wobei das Innenteil, das Außenteil und die Federarme einstückig ausgebildet sind. Die Federarme sind bei dem aus EP 2064448 bekannten Abstützelement dadurch ausgebildet, dass in einem scheibenförmigen Element in Umfangsrichtung verlaufende Schlitze vorgesehen werden. Hierdurch ist eine Bewegung des ringförmigen Innenteils relativ zum ringförmigen Außenteil möglich. Nachteilig mit dem aus EP 2064448 bekannten Abstützelement ist, dass dieses nur sehr geringe Dämpfungseigenschaften aufweist. Dies liegt insbesondere auch darin begründet, dass sich die Eigenschaften dieses Abstützelements bei Temperaturänderungen und durch Einfluss chemischer Substanzen der Umgebung verändern. Ferner werden radiale Bewegungen des Lageraußenrings des Wälzlagers nur schlecht übertragen, da die Federarme reibungsbehaftet sind. Das Reibverhalten variiert hierbei sehr stark.

Eine Vakuumpumpe mit den Merkmalen des Oberbegriffs des Anspruchs 1 ist in WO 2006/131694 beschrieben.

Aufgabe der Erfindung ist es eine Vakuumpumpe, insbesondere eine Turbomolekularvakuumpumpe zu schaffen, bei der ein Abstützelement vorgesehen ist mit dem eine verbesserte Dämpfung eines Lagerelements realisiert ist.

Die Lösung der Aufgabe erfolgt erfindungsgemäß durch eine Vakuumpumpe mit den Merkmalen des Anspruchs 1.

Eine Vakuumpumpe weist ein Pumpengehäuse auf, in dem Statorelemente angeordnet sind oder das Statorelemente ausbildet. Mit dem mindestens einen Statorelement wirkt mindestens ein Rotorelement zusammen. Je nach Vakuumpumpentyp sind die Statorelemente und die Rotorelemente unterschiedliche ausgebildet. Bei einer Turbomolekularpumpe weist das Statorelement mehrere Statorscheiben auf, die mit mehreren Rotorscheiben zusammen wirken. Ent-sprechend wirken bei einer Schraubenpumpe Schraubenrotoren mit der entsprechenden Bohrung bzw. Ausnehmung in dem Gehäuse zusammen, wobei die Innenseite des Gehäuses sodann das Statorelement bildet. Entsprechendes gilt für Roots- oder Klauenpumpen. Die Rotorelemente werden von mindestens einer Rotorwelle getragen. Die mindestens eine Rotorwelle ist in dem Pumpengehäuse angeordnet und wird von in diesem angeordneten Lagerelementen getragen. Bei den Lagerelementen kann es sich insbesondere um Magnet- oder Wälzlager handeln. Bei Wälzlagern ist es vorteilhaft diese nicht unmittelbar im Pumpengehäuse anzuordnen, sondern zwischen dem Wälzlager insbesondere an dem Außenring des Wälzlagers unter dem Pumpengehäuse ein Abstützelement vorzusehen.

Das Abstützelement weist erfindungsgemäß ein Innenteil sowie ein Außenteil auf. Das Innenteil ist hierbei mit dem Lagerelement verbunden, wobei das Innenteil ggf. auch den Außenring des Wälzlagers ausbilden kann. Das Außenteil ist mit dem Pumpengehäuse verbunden. Zur Verbindung des Innenteils mit dem Außenteil sind mehrere Federarme vorgesehen. In besonders bevorzugter Ausführungsform sind die Federarme einstückig mit dem Innenteil und/oder dem Außenteil verbunden bzw. ausgebildet. Zur Verbesserung der Dämpfungseigenschaften ist es erfindungsgemäß vorgesehen, dass die Federarme jeweils zumindest einen Hohlraum aufweisen. Hierdurch ist eine gute Verformung der Federarme möglich, sodass die Dämpfungseigenschaften verbessert werden.

In besonders bevorzugter Ausführungsform ist in dem mindestens einen Hohlraum Dämpfungsmaterial angeordnet. Der mit Dämpfungsmaterial gefüllte Hohlraum kann mit einem Dämpfungsmaterial unterschiedlicher Eigenschaften, Menge etc. gefüllt werden, um die Dämpfungseigenschaften zu verändern. Besonders bevorzugt ist es als Dämpfungsmaterial ein Pulver vorzusehen. Bevorzugt wird als Pulver eine Masse aus feinen Festkörperpartikeln verwendet, die unter den Betriebsbedingungen nicht verklumpen oder verschmelzen.

Der mindestens eine Hohlraum ist erfindungsgemäß je Federarm vollständig umschlossen. Hierdurch ist gewährleistet, dass das Dämpfungsmaterial nicht aus dem Hohlraum herausgedrückt wird, wodurch die Dämpfungseigenschaften verändert würden. Auch der Verlust von Dämpfungsmaterial ist hierdurch vermieden. Dies ist insbesondere bei ggf. im Bereich der Abstützelemente herrschendem Unterdruck vorteilhaft. Die in den Federarmen vorgesehenen Hohlräume können hierbei durch Deckel verschlossen sein. Bevorzugt ist es, dass bereits ein Herstellungsverfahren gewählt wird, bei dem die Hohlräume umschlossen sind. Beispielsweise könnte das Abstützelement gegossen werden, wobei die Hohlräume durch verlorene Kerne ausgebildet werden. Bevorzugt ist die Herstellung der Abstützelemente im 3D-Druck, wobei es hierbei möglich ist in den Hohlräumen das entsprechende Pulver vorzusehen und die Hohlräume während des Drucks auszubilden. Besonders bevorzugt ist hierbei ein metallischer 3D-Druck.

Vorzugsweise macht der mindestens eine Hohlraum oder die mehreren Hohlräume je Federarm mindestens 5% des Volumens des jeweiligen Federarms aus. Hierdurch ist es möglich insbesondere auch in Abhängigkeit des verwendeten Dämpfungsmaterials die Dämpfungscharakteristik der Federarme einzustellen.

In besonders bevorzugter Ausführungsform der Erfindung sind die einzelnen Federarme ringsegmentförmig oder spiralsegmentförmig. Die Federarme bilden somit einen Teil eines Rings oder einer Spirale aus. Insbesondere erstrecken sich die ring- oder spiralsegmentförmigen Federarme um einen Winkel von mehr als 90° insbesondere mehr als 180° und besonders bevorzugt mehr als 270° Grad. Des Weiteren ist es bevorzugt, dass sich mehrere Federarme in radialer Richtung des Abstützelements, d.h. in radialer Richtung der Rotorwelle zumindest teilweise überdecken. Auch eine Überdeckung in Umfangsrichtung ist insbesondere bei segment-oder spiralsegmentförmigen Ausgestaltungen der Federarme bevorzugt, um eine gute Dämpfungscharakteristik zu erzielen.

Besonders bevorzugt ist es, dass alle Federarme mit dem Innenteil und/oder dem Außenteil fest verbunden sind. Insbesondere ist es bevorzugt, dass die Federarme, das Innenteil und das Außenteil einstückig ausgebildet sind.

Die Erfindung wird anhand einer bevorzugten Ausführungsform unter Bezugnahme auf die anliegenden Zeichnungen näher erläutert.

Es zeigen:
- Figur 1: eine stark vereinfachte schematische Ansicht eines Teils einer Turbomolekularpumpe,
- Figur 2: eine schematische Draufsicht eines Abstützelement und
- Figur 3: eine schematische Schnittansicht entlang der Linie III-III in Figur 2.

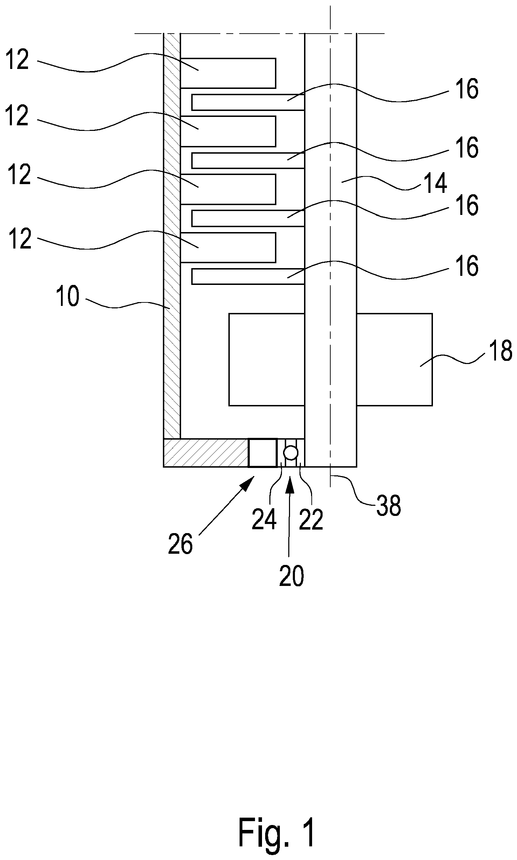

In der stark vereinfachten Schnittansicht in Figur 1 ist als Vakuumpumpe eine Turbomolekularpumpe dargestellt. Diese weist ein Pumpengehäuse 10 auf. Das Pumpengehäuse 10 trägt ein Statorelement, das im dargestellten Ausführungsbeispiel mehrere Statorscheiben 12 aufweist. Ferner ist in dem Pumpengehäuse 10 eine Rotorwelle 14 angeordnet, die ein Rotorelement 16 trägt. Diese weist im dargestellten Ausführungsbeispiel mehrere Rotorscheiben 16 auf. Die Rotorwelle 14 wird über einen schematisch dargestellten Elektromotor 18 angetrieben. Gelagert ist die Rotorwelle 14 in einem Deckel des Gehäuses 10 über ein Lager 20. Auf einer gegenüberliegenden Seite am Einlass der Vakuumpumpe ist ggf. ein weiteres Wälzlager oder ein Lagerelement vorgesehen.

Ein Innenring 22 des Wälzlagers 20 ist mit der Rotorwelle 14 verbunden. Ein Außenring 24 des Wälzlagers 20 ist mit einem Abstützelement 26 verbunden.

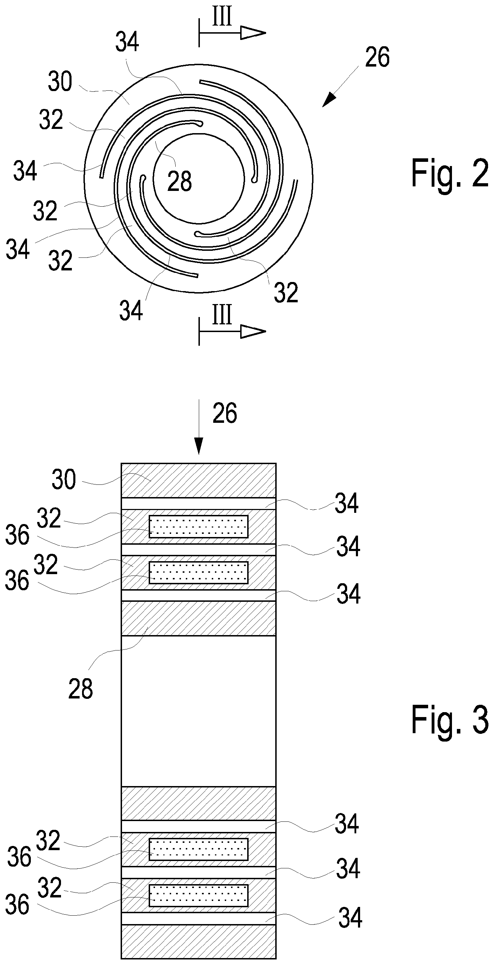

Das Abstützelement 26 (Figuren 2 und 3) weist ein Innenteil 28 und einen Außenteil 30 auf. Das Innenteil 28 ist im dargestellten Ausführungsbeispiel über vier Federarme 32 mit dem Außenteil 30 verbunden. Im dargestellten Ausführungsbeispiel ist das gesamte Abstützelement 26 einstückig ausgebildet.

Die spiralsegmentförmig ausgebildeten Federarme 32 sind durch Schlitze 34 voneinander getrennt. Die Schlitze 34 erstrecken sich über die gesamte Dicke des Abstützelements 26 (Figur 3).

In jedem der Federarme 32 ist ein Hohlraum 36 vorgesehen, wobei je Federarm 32 auch mehrere Hohlräume 36 vorgesehen sein können. Die Hohlräume 36 sind zur Einstellung von Dämpfungscharakteristika mit einem Pulver gefüllt.

Durch das erfindungsgemäße Abstützelement ist es möglich, bezogen auf eine Rotationsachse 38 (Figur 1) auftretende Axial- und Radialkräfte zu dämpfen.

## Patentansprüche

1. Vakuumpumpe mit
einem in einem Pumpengehäuse (10) angeordneten Statorelement (12), einem mit dem Statorelement (12) zusammenwirkenden Rotorelement (16),
einer das Rotorelement (16) tragenden Rotorwelle (14),
im Pumpengehäuse (10) angeordneten, die Rotorwelle (14) tragenden Lagerelementen (20) und
einem zumindest eines der Lagerelemente (20) umgebenden Abstützelement (26) mit einem mit dem Lagerelement (20) verbundenden Innenteil (28), einem mit dem Pumpengehäuse (10) verbundenem Außenteil (30) und mehreren das Innenteil (28) mit dem Außenteil (30) verbindenden Federarmen (32)
**dadurch gekennzeichnet, dass**
die Federarme (32) jeweils mindestens einen Hohlraum (36) aufweisen, der vollständig umschlossen ist.

2. Vakuumpumpe nach Anspruch 1, **dadurch gekennzeichnet, dass** der mindestens eine Hohlraum (36) mit Dämpfungsmaterial, insbesondere pulverförmigen Material, gefüllt ist.

3. Vakuumpumpe nach Anspruch 1 oder 2, **dadurch gekennzeichnet, dass** der mindestens eine Hohlraum oder mehrere Hohlräume (36) gemeinsam je Federarm (32) 5% das Volumen des Federarms (32) ausmachen.

4. Vakuumpumpe nach einem der Ansprüche 1 bis 3, **dadurch gekennzeichnet, dass** die Federarme (32) ringsegmentförmig oder spiralsegmentförmig ausgebildet sind.

5. Vakuumpumpe nach einem der Ansprüche 1 bis 4, **dadurch gekennzeichnet, dass** mehrere Federarme (32) sich in radialer Richtung des Abstützelements (26) zumindest teilweise überdecken.

6. Vakuumpumpe nach einem der Ansprüche 1 bis 5, **dadurch gekennzeichnet, dass** alle Federarme (32) mit dem Innenteil (28) und/oder dem Außenteil (30) fest verbunden sind.

7. Vakuumpumpe nach einem der Ansprüche 1 bis 6, **dadurch gekennzeichnet, dass** die Federarme (32), das Innenteil (28) und das Außenteil (30) einstückig ausgebildet sind.

## Claims

1. A vacuum pump, comprising
a stator element (12) arranged in a pump housing (10),
a rotor element (16) cooperating with the stator element (12),
a rotor shaft (14) supporting the rotor element (16),
bearing elements (20) arranged in the pump housing (10) and supporting the rotor shaft (14), and
at least one supporting element (26) surrounding at least one of the bearing elements (20) and having an inner portion (28) connected to the bearing element (20), an outer portion (30) connected to the pump housing (10) and a plurality of spring arms (32) connecting the inner portion (28) to the outer portion (30),
**characterized in that**
each spring arm (32) comprises at least one hollow space (36) that is completely enclosed.

2. The vacuum pump according to claim 1, **characterized in that** the at least one hollow space (36) is filled with a damping material, in particular a powdery material.

3. The vacuum pump according to claim 1 or 2, **characterized in that**, for each spring arm (32), the at least one hollow space or a plurality of hollow spaces (36) jointly account for at least 5 % of the volume per spring arm (32).

4. The vacuum pump according to any one of claims 1 to 3, **characterized in that** the spring arms (32) are configured as annular segments or helical segments.

5. The vacuum pump according to any one of claims 1 to 4, **characterized in that** a plurality of spring arms (32) at least partially overlap each other in a radial direction of the supporting element (26).

6. The vacuum pump according to any one of claims 1 to 5, **characterized in that** all spring arms (32) are fixedly connected to the inner portion (28) and/or the outer portion (30).

7. The vacuum pump according to any one of claims 1 to 6, **characterized in that** the spring arms (32), the inner portion (28) and the outer portion (30) are integrally formed.

## Revendications

1. Pompe à vide avec
un élément stator (12) disposé dans un corps de pompe (10),
un élément rotor (16) en interaction avec l'élément stator (12),
un arbre de rotor (14) portant l'élément rotor (16),
des éléments de roulement (20) disposés dans le corps de pompe (10) et portant l'arbre de rotor (14) et
un élément de soutien (26) entourant au moins un des éléments de roulement (20) et ayant une partie intérieure (28) reliée à l'élément de roulement (20), une partie extérieure (30) reliée au corps de pompe (10) et plusieurs bras ressort (32) reliant la partie intérieure (28) à la partie extérieure (30),
**caractérisée en ce que**
les bras ressort (32) comprennent chacun au moins un espace creux (36) qui est complètement enfermé.

2. Pompe à vide selon la revendication 1, **caractérisée en ce que** ledit au moins espace creux (36) est rempli d'un matériau d'amortissement notamment d'un matériau sous forme de poudre.

3. Pompe à vide selon la revendication 1 ou 2, **caractérisée en ce que** ledit au moins espace creux ou plusieurs espaces creux (36) représentent ensemble et par bras ressort (32) 5 % du volume du bras ressort (32).

4. Pompe à vide selon l'une des revendications 1 à 3, **caractérisée en ce que** les bras ressort (32) sont configurés en forme d'un segment d'anneau ou en forme d'un segment de spirale.

5. Pompe à vide selon l'une des revendications 1 à 4, **caractérisée en ce que** plusieurs bras de ressort (32) se chevauchent, du moins en partie, en direction radiale de l'élément de soutien (26).

6. Pompe à vide selon l'une des revendications 1 à 5, **caractérisée en ce que** tous les bras de ressort (32) sont solidement reliés à la partie intérieure (28) et/ou la partie extérieure (30).

7. Pompe à vide selon l'une des revendications 1 à 6, **caractérisée en ce que** les bras de ressort (32), la partie intérieure (28) et la partie extérieure (30) sont formés d'un seul bloc.
